# EUROPEAN PATENT SPECIFICATION

(11) **EP 1 570 753 B1**
(45) Date of publication and mention of the grant of the patent: **08.09.2010**
(21) Application number: 05004667.1
(22) Date of filing: 03.03.2005
(51) Int. Cl.: A23L 3/36, A23L 3/18, A23B 4/005, A23B 4/06

(54) **Apparatus for continuosly surface pasteruizing meat and food products**
Vorrichtung für kontinuierliche Oberflächenpasteurisierung von Fleisch und Lebensmitteln
Appareil pour la pasteurisation en continu de viande et de produits alimentaires

(30) Priority: 05.03.2004 IT MI20040437
(43) Date of publication of application: 07.09.2005
(73) Proprietor: SINTECO IMPIANTI S.R.L., 20099 Sesto San Giovanni, Milano (IT)
(72) Inventor: Franck, Adam, 20099 Sesto San Giovanni Milano (IT)
(74) Representative: Cicogna, Franco

(56) References cited:
- WO-A-03/032757
- DE-U1- 9 306 870
- FR-A- 2 786 986
- GB-A- 497 489
- US-A- 2 010 667
- US-A- 3 255 690
- US-A- 3 868 897
- US-A- 3 966 980
- US-A- 4 850 270

## Description

### BACKGROUND OF THE INVENTION

The present invention relates to an apparatus for continuously surface pasteurizing meat and food products in general, which are packaged with a variable holding time, and which can be used, for example, for pasteurizing entire hams, cooked ham cuts, mortadellas, roast-beef products, chicken and turkey based products, raviolis or tortellinis in tray packages, ready meats and so on.

As is known, in pasteurizing food products, in particular meat products, the holding time in which the products are held at a pasteurizing temperature and the cooling time, after the heating of the products, represent basic parameters.

If the above mentioned parameters are not perfectly controlled, it is not possible to provide satisfactory results in preserving the products processed by such a technique.

Also known is the fact that, after cooking, the processed products are cooled, separated and packaged.

During the last processing operating steps, the products are surface contaminated because of different polluting sources (such as due to the processing personnel, air, packaging operations, and so on).

Thus, it is necessary to perform a surface pasteurizing process to protect and preserve in time the mentioned products.

Document WO 03/032757 A discloses a pasteurizing apparatus, comprising top nozzles for spraying water on the products and pressurized water jets in product processing basins, to perform a pasteurizing of the products up to the "core" thereof.

Document US-A-3 868 897 discloses a treatment apparatus for treating, by means of liquids, products such as food or pharmaceutical substances. This document does not address or solve the problem of surface pasteurizing cooked products.

Document US-A-2 010 667 discloses an apparatus for pasteurizing liquids in containers, which liquids are not surface pasteurized.

Document US-A-3 255 690 discloses a liquid-solid continuous aseptic processing system for processing liquids and particles of fruits, vegetables or meats. This document does not teach or suggest to surface sterilize the products.

Document GB 497 489 discloses an installation for continuously pasteurizing packaged products in particular liquid products contained in jars and bottles. This apparatus too is not adapted to surface pasteurized cooked products.

Finally, document FR-A-2 786 986 discloses an apparatus comprising a heating chamber and a cooling chamber and an additional chilling chamber for pasteurizing, also on surface, non-cooked deboned animal bodies, the pasteurizing being made under vacuum condition, and the pasteurizing abruptly varies the organoleptic properties of the products, in particular boned meat products, for hanging, that is making softer, the meat of the deboned animal bodies, in an uncooked condition.

### SUMMARY OF THE INVENTION

Accordingly, the aim of the present invention is to provide such an apparatus for pasteurizing food products, allowing to change and control, with a great accuracy, both the holding time in which the products are held at a pasteurizing temperature, and the cooling times.

Within the scope of the above mentioned aim, a main object of the invention is to provide such an apparatus allowing to continuously perform a surface pasteurizing and which is very compact construction-wise.

Another particular object of the invention is to provide such an apparatus suitable to process several types of products, of different size and weights, with holding times and temperatures adapted to their characteristics, while providing a very safe and reliable operation.

According to one aspect of the present invention, the above mentioned aim and objects, as well as yet other objects, which will become more apparent hereinafter, are achieved by an apparatus suitable for continuously surface pasteurizing meat and food products according to claim 1.

### BRIEF DESCRIPTION OF THE DRAWINGS

Further characteristics and advantages of the present invention will become more apparent hereinafter from the following detailed disclosure of a preferred, embodiment of the invention, which is illustrated, by way of an example, in the accompanying drawings, where:

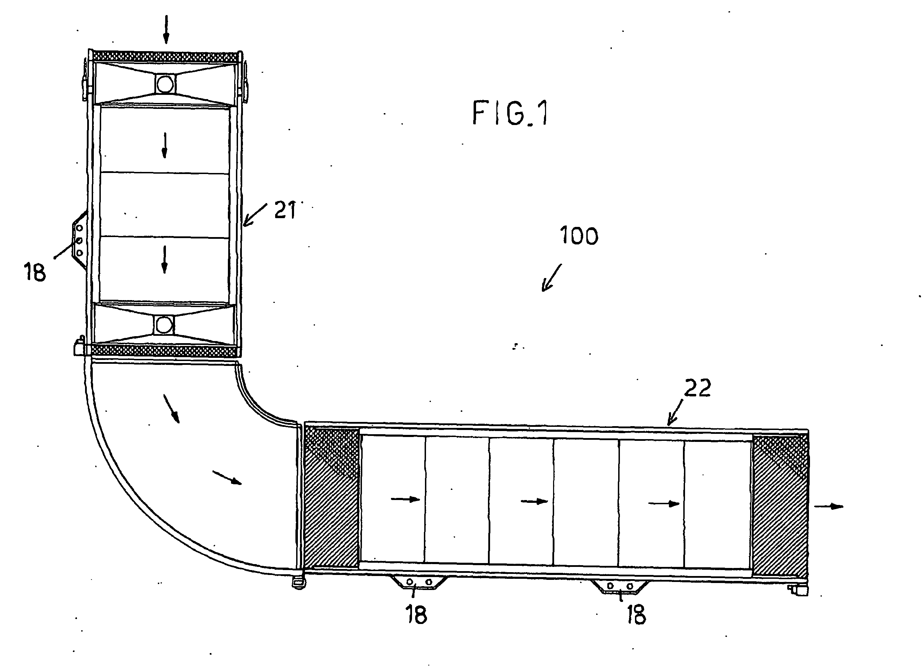

Figure 1 is a top plan view of the inventive apparatus, in a 90° embodiment thereof;

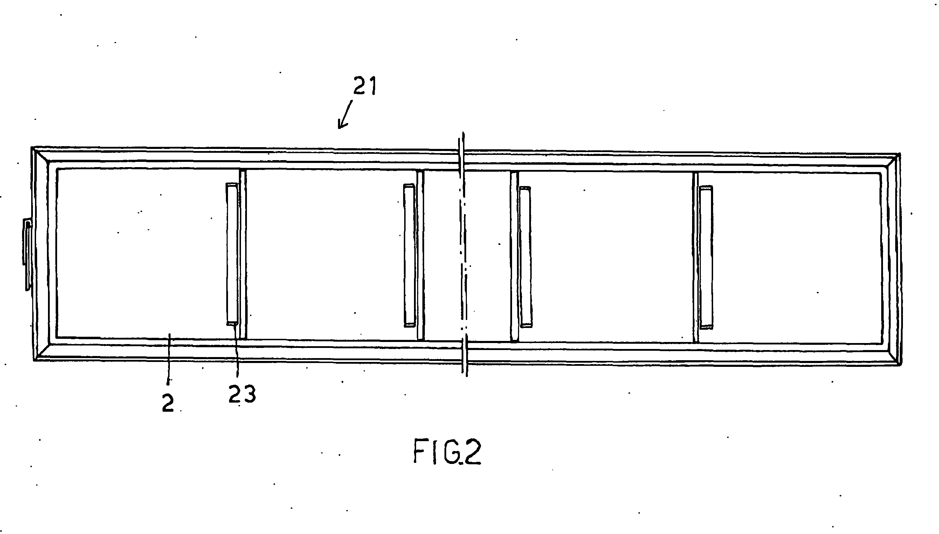

Figure 2 is a further top plan view of a basin included in the inventive apparatus;

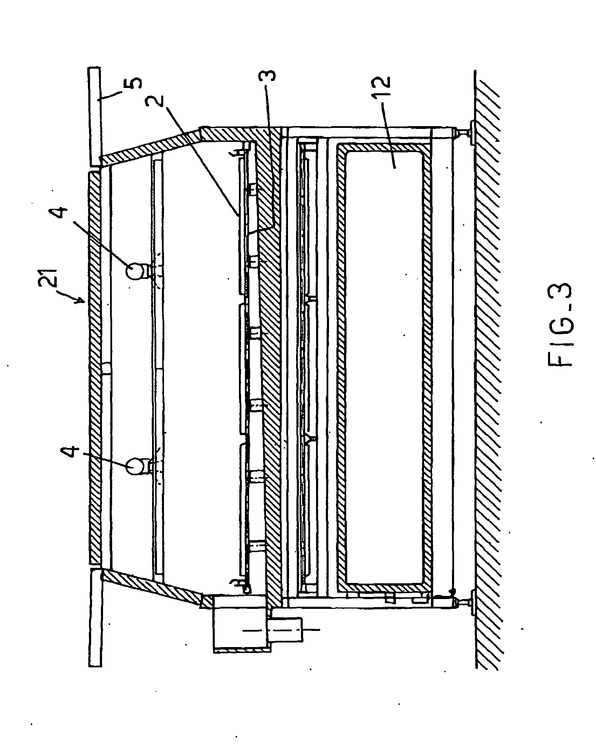

Figure 3 is a cross-sectioned front elevation view of the pasteurizing section;

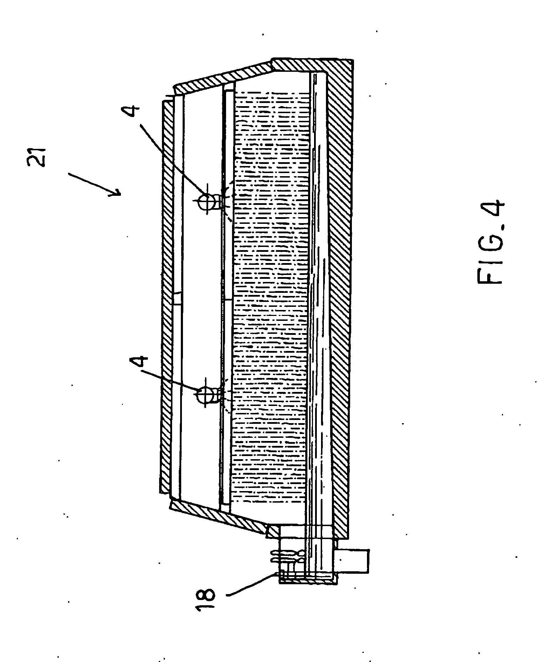

Figure 4 is a further cross-sectioned front elevation view of the pasteurizing basin;

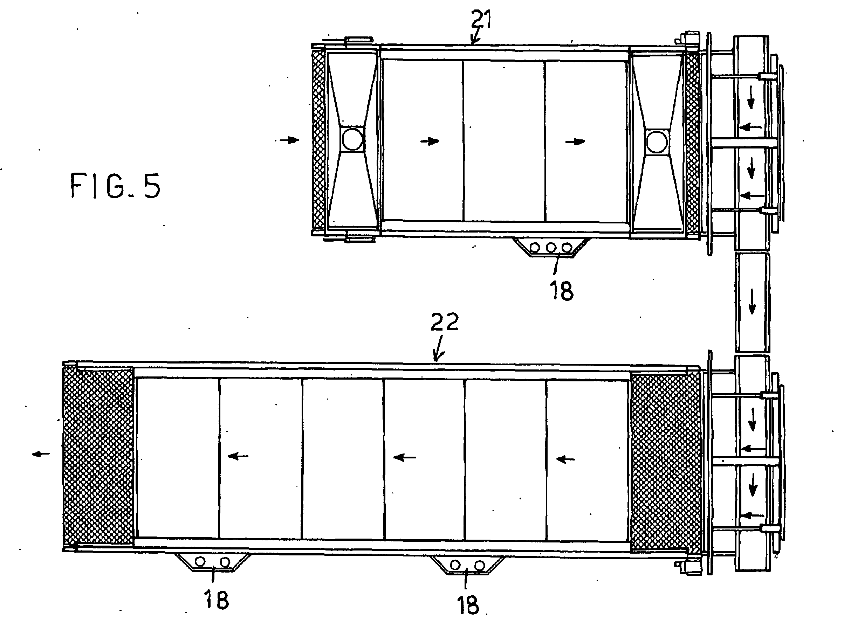

Figure 5 is a top plan view of the apparatus, according to a further aspect of the invention;

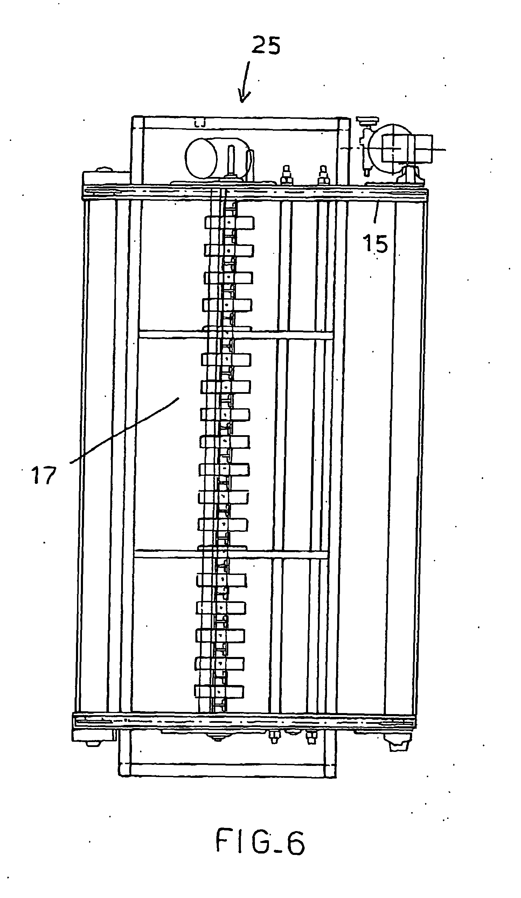

Figure 6 is a top plan view of the blowing tunnel;

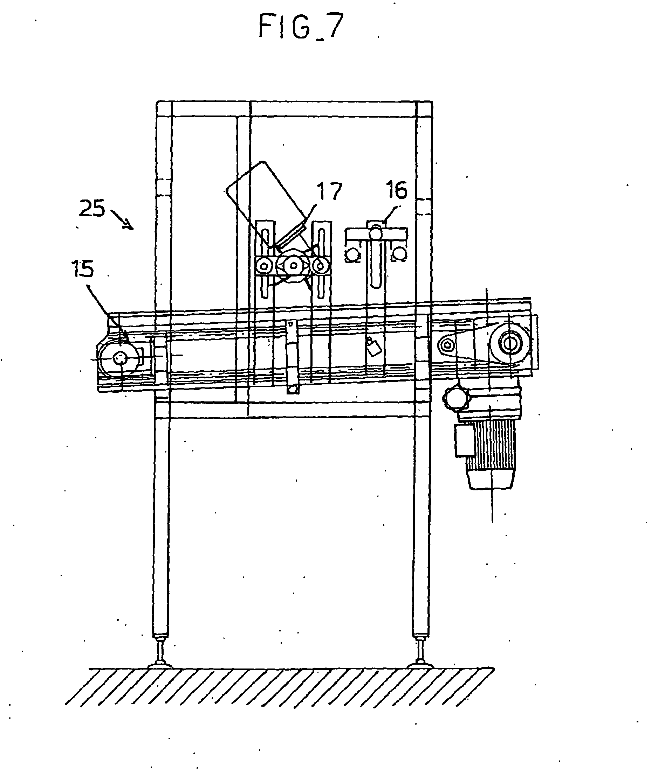

Figure 7 is an elevation view of the blowing tunnel;
Figure 8 is a further top plan view of the apparatus, outside the scope of the invention, in an overlapping track arrangement; and
Figure 9 is an elevation view of the apparatus shown in figure 8.

### DESCRIPTION OF THE PREFERRED EMBODIMENTS

With reference to the number references of the above mentioned figures, the apparatus according to the present invention, which has been generally indicated by the reference number 100, comprises at least two processing basins, respectively a pasteurizing basin 21 and a cooling basin 22, both longitudinally and horizontally extending and being arranged with an in-line or aligned arrangement.

More specifically, the pasteurizing basin 21 is supplied with hot water and the cooling basin 22 is supplied or fed with cold water (or being fed with a salt solution for specific cooling processes).

The apparatus further comprises feeding means for feeding the products along the two basins, transfer means for transferring the products from the pasteurizing basin to the cooling basin, holding time changing means for changing the holding time in which the products are held in the two basins, withdrawing means for withdrawing the products from the cooling basin, and further holding time changing means for selectively changing the holding time of said products depending on their characteristics.

The pasteurizing basin 21 is supplied by hot water supplying means (not shown) with hot water at a temperature suitable to provide a pasteurizing of the product supplied inside said basin, whereas the cooling basin 22 is supplied with cold water, to properly cool the pasteurized products.

In particular, said products are sprayed by hot water through a so-called rain spraying system, comprising a manifold 4 for the pasteurizing basin 21.

Also said cooling basin is provided with a like rain spraying system supplied with cold water by cold water supplying means (also not shown).

The temperature of the hot water supplied to the pasteurizing basin 21 is preferably from 75°C to 95°C, whereas the temperature of cold water supplied to the cooling basin 22 is preferably from 1°C to 2°C.

Said basins comprise furthermore a water level adjusting system, generally indicated by the reference number 18, also allowing to process the product by immersion, if required.

The products to be processed are fed along the pasteurizing and cooling basins through chain conveyors, independent for each basin, which are entrained on motorized pinions, or sprockets, thereby feeding the conveyors along the longitudinal extension of the basins.

The conveyor belt is driven by a chain transmission, coupling the shaft of a driven pinion of the conveyor to a driving motor.

The conveyor belt 3 can be also provided, along its extension, of entraining dog 23, spaced from one another and engaging with the products to be pasteurized supplied to the basins, for feeding products having a particular size, to be processed along the longitudinal extension of the basins.

According to the available space, it is possible to design different arrangements for the processing system.

Processing systems having a high processing rate and long processing times require large spaces.

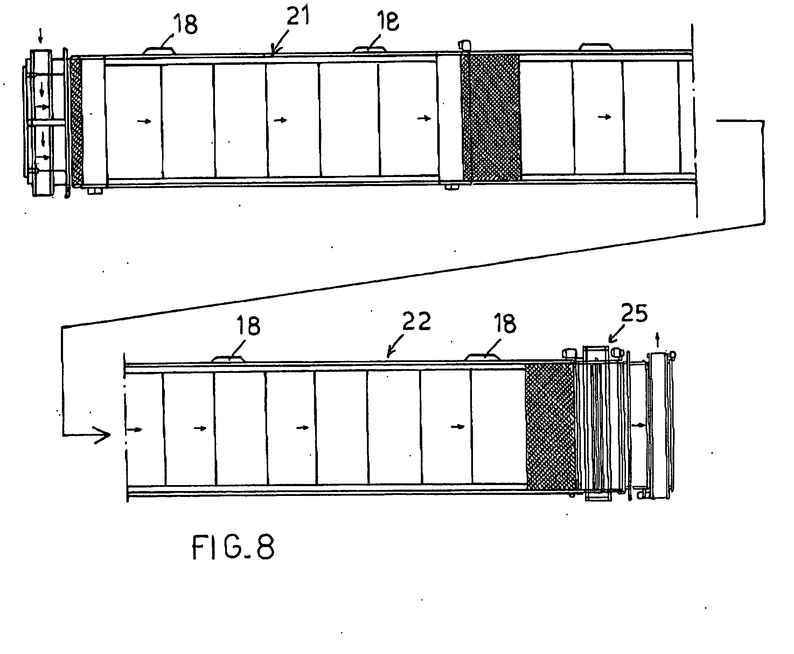

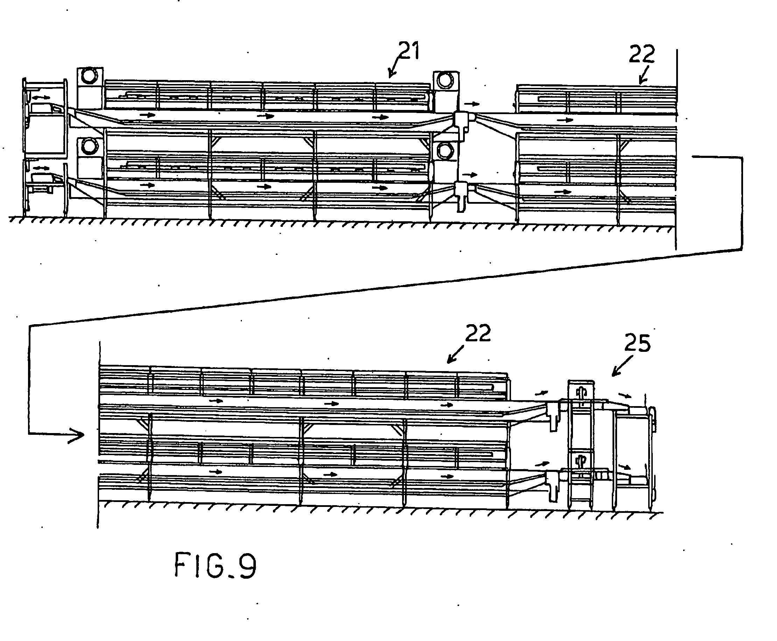

A first approach is that of overlapping two processing lines, thereby providing a very compact and flexible system, as is shown in figures 8 and 9.

With such an arrangement, it is possible to process two different products in the same time.

Other possible arrangements are parallel arrangements, 90° arrangements.

The system is perfectly thermally insulated in the above mentioned cold and hot sections, without thermal bridges, with several perfectly tightly insulated access doors.

The basins 21 and 22 are further provided with covering elements, including checking doors 5, arranged along the extension of the basins, and on each side thereof.

The hot section comprises a hot water tank 12, designed for discharging hot water from the basin, as a processing cycle ends.

The apparatus further comprises a loading system for automatically loading the products, in particular different size products.

Said apparatus comprises moreover a pressurized air drying system for drying the products, including a blowing tunnel 25,which comprises a conveyor belt 15, blowing ramps 17 and a product distributor 16 (for products of a small size).

It has been found that the invention fully achieves the intended aim and objects.

In fact, the invention provides an apparatus for continuously surface pasteurizing meat and food products in general, which allows to process the products at a low cost with respect to the cost of the products themselves.

The apparatus according to the invention is suitable to process several types of products, of different size and weights, with holding times and temperatures suitable for their characteristics, while providing a very safe and reliable operation.

The apparatus comprises moreover all the necessary conveyor belts for feeding the products to the pasteurizing section, which includes a plurality of conveyor belts.

The above mentioned systems have been designed to accurately load the products, in order to optimize their position through the overall surface of the apparatus.

The processing line is a fully automatic one, any operators being absent.

The product loading/unloading systems, in particular, depend on the type of the products to be processed.

A great advantage of the apparatus according to the invention is its low water requirement.

Another advantage is that the hot and cold water processing and pumping systems are already arranged under the basins and are properly coupled to allow a quick installation of the system.

Moreover, the inventive apparatus is very simple and compact.

At the end of the processing operation, a pressurized air drying system, of high efficiency, allows the products to be easily dried.

In practicing the invention, the used materials, as well as the contingent size and shapes, can be any, depending on requirements.

## Claims

1. An apparatus (100) suitable for continuously surface pasteurizing either by hot and cold water spraying or by hot and cold water immersing packaged cooked meat and food products, such as cooked entire hams, ham cuts, mortadellas chicken and turkey meat cooked products, said cooked products being surface contaminated by different polluting sources, due to manual processing and packaging operations, said apparatus comprising two in-line longitudinally horizontally extending basins (21, 22), respectively a hot pasteurizing basin (21) for surface pasteurizing said cooked products, and a cooling basin (22) for cooling said surface pasteurized products, said hot pasteurizing basin being supplied with hot water by a hot water processing and pumping system arranged under said basin including a hot water rain spraying system for spraying hot water on said products, said cooling basin being supplied with cold water by a cold water processing and pumping system arranged under said basin including a cold water rain spraying system for spraying cold water on said products, said hot water having a temperature from 75°C to 95°C, said cold water having a temperature from 1°C to 2°C, said apparatus (100) further comprising feeding means for feeding said cooked products along said two basins, transfer means for transferring said cooked products from said pasteurizing basin to said cooling basin, time changing means for changing the holding pasteurizing and cooling time of said cooked products in said two basins, in a selective manner, a water level adjusting system (18), and withdrawing means for withdrawing said cooked products, in a surface pasteurized condition thereof, from said cooling basin, said apparatus further comprising a pressurized air drying system for drying said products, said air drying system comprising an air blowing tunnel (25) including a conveyor belt (15), blowing ramps (17) and a product distributor (16).

2. An apparatus, according to claim 1, **characterized in that** said product feeding means comprise chain conveyors (3) driven along the longitudinal extension of the basins, independent for each basin (21, 22), entrained on driven pinions, in turn driven by a chain transmission, coupling the shaft of the driven pinion of each conveyor to a driving motor.

3. An apparatus, according to claim 2, **characterized in that** said conveyor chain (3) comprises spaced dog entraining elements (23) adapted to engage with products to be pasteurized in said basins (21, 22).

4. An apparatus, according to claim 1, **characterized in that** said apparatus comprises two overlapping processing basin lines, adapted to simultaneously process two different products.

5. An apparatus, according to claim 1, **characterized in that** said apparatus has a parallel arrangement.

6. An apparatus, according to claim 1, **characterized in that** said apparatus has a 90° arrangement.

7. An apparatus, according to claim 1, **characterized in that** said apparatus has thermally insulated hot and cold sections without thermal bridges.

8. An apparatus, according to claim 1, **characterized in that** said apparatus comprises a plurality of insulated sealed access doors.

9. An apparatus, according to claim 1, **characterized in that** said basins (21, 22) comprise covering elements including check doors (5), arranged along said basins (21, 22) and on each side thereof.

10. An apparatus, according to claim 1, **characterized in that** said pasteurizing basin (21) comprises a hot water accumulating tank (12), for discharging hot water from said pasteurizing basin (21) at an end of a processing cycle.

## Patentansprüche

1. Vorrichtung (100), die für die kontinuierliche Oberflächenpasteurisierung von verpackten, gekochten Fleisch- und Nahrungsmittelprodukten, wie beispielsweise ganze gekochten Schinken, Schinkenscheiben, Mortadella oder gekochte Produkte aus Hühner- und Putenfleisch, entweder durch Übersprühen mit heißem und kaltem Wasser oder durch Untertauchen in heißem oder kaltem Wasser geeignet ist, wobei die gekochten Produkte durch unterschiedliche Kontaminationsquellen aufgrund der manuellen Herstellungs- und Verpackungsschritte auf der Oberfläche kontaminiert sind, wobei die Vorrichtung zwei längliche, horizontal verlaufende Becken (21, 22) in Reihe, beziehungsweise ein Heiß-Pasteurisier-Becken (21) für die Oberflächenpasteurisierung der gekochten Produkte und ein Kühlbecken (22) zum Kühlen der oberflächenpasteurisierten Produkte umfasst, wobei das Heiß-Pasteurisier-Becken mit heißem Wasser durch ein Heißwasseraufbereitungs- und Pumpsystem versorgt wird, das unter dem Becken angeordnet ist, einschließlich eines Heißwasser-Beregnungssystems zum Sprühen von heißem Wasser auf die Produkte, und das Kühlbecken mit Kaltwasser durch ein Kaltwasseraufbereitungs- und Pumpsystem versorgt wird, das unter dem Becken angeordnet ist, einschließlich eines Kaltwasser-Beregnungssystems zum Sprühen von kaltem Wasser auf die Produkte, das heiße Wasser eine Temperatur zwischen 75°C und 95°C aufweist, das kalte Wasser eine Temperatur zwischen 1°C und 2°C aufweist, die Vorrichtung (100) ferner Zuführungsmittel zum Zuführen der gekochten Produkte entlang der zwei Becken, Transportmittel zum Transportieren der gekochten Produkte vom Pasteurisier-Becken zum Kühlbecken, Zeit-Änderungsmittel zum Ändern der Haltezeit für das Pasteurisieren und Kühlen der gekochten Produkte in den beiden Becken auf eine selektive Art und Weise, ein Wasserstands-Reguliersystem (18) und Entnahmemittel zum Entnehmen der gekochten Produkte, in einem oberflächenpasteurisierten Zustand, aus dem Kühlbecken aufweist, die Vorrichtung ferner ein Drucklufttrocknungssystem zum Trocknen der Produkte umfasst, wobei das Lufttrocknungssystem einen Luftgebläsekanal (25) enthält, einschließlich eines Förderbandes (15), Düsenleisten (17) und eines Produktverteilers (16).

2. Vorrichtung nach Anspruch 1, **dadurch gekennzeichnet, dass** die Produkt-Zuführungsmittel Kettenförderer (3) umfassen, die entlang der Längsausdehnung der Becken laufen, unabhängig für jedes Becken (21, 22), eingekuppelt auf angetriebenen Ritzeln, welche wiederum durch einen Kettenantrieb angerieben werden, wodurch die Welle von dem angetriebenen Ritzel von jedem einzelnen Förderband mit einem Antriebsmotor gekoppelt ist.

3. Vorrichtung nach Anspruch 2, **dadurch gekennzeichnet, dass** die Transportkette (3) in regelmäßigen Abständen Mitnehmerelemente (23) umfasst, die zum Greifen der Produkte, die in den Becken (21, 22) pasteurisiert werden sollen, ausgebildet sind.

4. Vorrichtung nach Anspruch 1, **dadurch gekennzeichnet, dass** die Vorrichtung zwei überlappende Reihen von Behandlungsbecken umfasst, die zum gleichzeitigen Behandeln von zwei unterschiedlichen Produkten ausgelegt sind.

5. Vorrichtung nach Anspruch 1, **dadurch gekennzeichnet, dass** die Vorrichtung eine Parallelanordnung aufweist.

6. Vorrichtung nach Anspruch 1, **dadurch gekennzeichnet, dass** die Vorrichtung eine 90°-Anordnung aufweist.

7. Vorrichtung nach Anspruch 1, **dadurch gekennzeichnet, dass** die Vorrichtung thermisch isolierte heiße und kalte Abschnitte ohne Wärme-/Kältebrücken aufweist.

8. Vorrichtung nach Anspruch 1, **dadurch gekennzeichnet, dass** die Vorrichtung mehrere isolierte, abgedichtete Zugangstüren umfasst.

9. Vorrichtung nach Anspruch 1, **dadurch gekennzeichnet, dass** die Becken (21, 22) Abdeckelemente mit Kontrolltüren (5) umfassen, die entlang der Becken (21, 22) und an jeder Seite davon angeordnet sind.

10. Vorrichtung nach Anspruch 1, **dadurch gekennzeichnet, dass** das Pasteurisier-Becken (21) einen Heißwasser-Sammelbehälter (12) für das Ablassen des heißen Wassers aus dem Pasteurisier-Becken (21) am Ende von einem Behandlungszyklus umfasst.

## Revendications

1. Appareil (100) destiné à la pasteurisation en surface continue, soit en pulvérisant de l'eau chaude et froide sur, soit en immergeant dans de l'eau chaude et froide de la viande et des produits alimentaires cuits et emballés, tels que des jambons entiers cuits, des morceaux de jambon et des mortadelles, des produits cuits de viande de poulet et de dinde, lesdits produits cuits étant contaminés en surface par des sources de pollution différentes, du fait des opérations manuelles de traitement et d'emballage, ledit appareil comprenant deux bacs (21, 22) en ligne, qui s'étendent horizontalement et longitudinalement, respectivement un bac de pasteurisation à chaud (21) destiné à la pasteurisation en surface desdits produits cuits, et un bac de refroidissement (22) destiné au refroidissement desdits produits pasteurisés en surface, ledit bac de pasteurisation à chaud étant alimenté en eau chaude grâce à un système de traitement et de pompage d'eau chaude agencé sous ledit bac, incluant un système de pulvérisation en pluie d'eau chaude destiné à pulvériser de l'eau chaude sur lesdits produits, ledit bac de refroidissement étant alimenté en eau froide grâce à un système de traitement et de pompage d'eau froide agencé sous ledit bac, incluant un système de pulvérisation en pluie d'eau froide destiné à pulvériser de l'eau froide sur lesdits produits, ladite eau chaude ayant une température comprise entre 75°C et 95°C, ladite eau froide ayant une température comprise entre 1°C et 2°C, ledit appareil (100) comprenant en outre un moyen d'alimentation destiné à alimenter lesdits produits cuits le long desdits deux bacs, un moyen de transfert destiné à transférer lesdits produits cuits dudit bac de pasteurisation au dit bac de refroidissement, un moyen de modification de la durée destiné à modifier la durée du maintien en pasteurisation et en refroidissement desdits produits cuits dans lesdits deux bacs, d'une manière sélective, un système d'ajustement du niveau d'eau (18), et un moyen d'enlèvement destiné à enlever lesdits produits cuits, dans un état de pasteurisation en surface de ceux-ci, dudit bac de refroidissement, ledit appareil comprenant en outre un système de séchage par air sous pression destiné à sécher lesdits produits, ledit système de séchage par air comprenant un tunnel de soufflage d'air (25) incluant une bande transporteuse (15), des rampes de soufflage (17) et un distributeur de produits (16).

2. Appareil selon la revendication 1, **caractérisé en ce que** ledit moyen d'alimentation en produits comprend des convoyeurs à chaîne (3) entraînés le long de l'extension longitudinale des bacs, indépendants pour chaque bac (21, 22), entraînés sur des pignons menés, entraînés à leur tour par une transmission par chaîne, couplant l'arbre du pignon mené de chaque convoyeur à un moteur d'entraînement.

3. Appareil selon la revendication 2, **caractérisé en ce que** ledit convoyeur à chaîne (3) comprend des éléments d'entraînement à crabots espacés (23) conçus pour s'engager sur les produits devant être pasteurisés dans lesdits bacs (21, 22).

4. Appareil selon la revendication 1, **caractérisé en ce que** ledit appareil comprend deux lignes de bacs de traitement qui se chevauchent, conçues pour traiter simultanément deux produits différents.

5. Appareil selon la revendication 1, **caractérisé en ce que** ledit appareil présente un agencement en parallèle.

6. Appareil selon la revendication 1, **caractérisé en ce que** ledit appareil présente un agencement à 90°.

7. Appareil selon la revendication 1, **caractérisé en ce que** ledit appareil possède des sections chaudes et froides isolées thermiquement sans ponts thermiques.

8. Appareil selon la revendication 1, **caractérisé en ce que** ledit appareil comprend une pluralité de portes d'accès étanches isolées.

9. Appareil selon la revendication 1, **caractérisé en ce que** lesdits bacs (21, 22) comprennent des éléments de couverture incluant des portes de contrôle (5), agencées le long desdits bacs (21, 22) et de chaque côté de ceux-ci.

10. Appareil selon la revendication 1, **caractérisé en ce que** ledit bac de pasteurisation (21) comprend une cuve d'accumulation d'eau chaude (12) permettant de décharger l'eau chaude provenant dudit bac de pasteurisation (21) à l'issue d'un cycle de traitement.
